# EUROPEAN PATENT APPLICATION

(11) **EP 0 661 692 A1**
(43) Date of publication of application: **05.07.1995**
(21) Application number: 95100054.6
(22) Date of filing: 03.01.1995
(51) Int. Cl.: G11B 5/39

(54) **Magnetoresistive head with reduced lead resistance**

(30) Priority: 03.01.1994 US 176193
(71) Applicant: READ-RITE CORPORATION, Milpitas California 95035 (US)
(72) Inventor: Cain, William C., San Jose, California 95123 (US)
(74) Representative: Körber, Wolfhart, Dr. rer.nat.

(57) **Abstract**

A magnetoresistive read transducer has passive end regions separated by a central avtive region, a thin film of magnetoresistive conductive layer (11) formed of magnetic material, the magnetoresistive conductive layer (11) extending over substantially only the central active region, a first and a second thin film (12) of hard magnetic material, first conductive lead members (13) overlying the first and second thin films (12) and magnetically coupled to the active central region of the magnetoresistive conductive layer (11), and second conductive lead members (27) overlying the first conductive lead members (12) and electrically connected thereto.

## Description

### BACKGROUND OF THE INVENTION

### Field of the Invention

This invention relates to thin film magnetic heads and in particular to a magnetic head having a magnetoresistive (MR) read transducer.

### Description of the Prior Art

The use of an MR transducer to sense magnetically recorded data has been known for many years. It has also been known that both longitudinal and transverse bias must be provided to such heads to eliminate Barkhausen noise and to maintain the sensor in its most linear operating range. Commonly assigned U.S. Patent 4,024,489 describes an MR sensor in which a hard magnetic bias layer is used. In that sensor, both the MR layer and the hard magnetic bias layer extend across the entire sensor to produce a transverse bias.

It has become increasingly difficult to produce MR read transducers in the small size needed to read the data recorded on ever-decreasing track widths at ever-increasing recording densities. One solution proposed to meet these requirements is described in U.S. Patent 4,663,685 in which transverse bias is produced in only a central active region of the sensor, and longitudinal bias is produced in the inactive end regions by means of exchange coupling between the part of the ferromagnetic MR layer which extends into the end regions and antiferromagnetic layers which extend over only the end region. U.S. Pat. 4,639,806 shows an MR sensor which has longitudinal bias produced by exchange coupling between the MR layer and hard magnetic layers in the end regions only.

These sensors have been shown to meet the present requirements. However, to meet future design requirements, the dimensional accuracy required severely limits the ability to build these structures in processes that are both economical and sufficiently accurate.

One current MR transducer manufacturing process produces a significant lead resistance which will become even more of a problem as track widths are reduced. Several factors have led to the current high resistance design:
1. It is not desirable to have a large portion of FeMn exposed at the air bearing surface (ABS), leading to a taper from the sensor, producing more squares on the mask.
2. The thickness of the lead is limited in the active region due to shielding contraints. If the lead thickness under the shield is increased, the gap will be thinner, producing shorting, and the thick leads will be more prone to smearing.
3. If the shield is removed outside of the active area, the inactive unshielded portion of the MR stripe (typically approximately 70% of the total length) will be at risk of side reading and unstable behavior due to stray fields.

### SUMMARY OF THE INVENTION

By using a longitudinal bias structure such, for example, as that described by Krounbi et al in U.S. Patent 5,018,057, (which is incorporated herein by reference), and without using Fe Mn, problems (1) and (3) above can be eliminated, thus allowing a second lead masking to be performed to provide thicker leads at the ABS, thereby reducing lead resistance.

If the lead thickness is increased and the gap thickness is not increased and is conformal, two problems will arise. First, the exaggerated topology will be reflected to the write gap, yielding a curved trailing pole which writes transitions with a nonlinear shape in the crosstrack direction. Such curved transitions can lead to poor offtrack performance in the disk drive. Another problem arising from the thicker leads between shields is an effective increase in the shielded to shield spacing in the lead region, which leads to increased sensitivity to offtrack information, thus degrading system performance.

### DESCRIPTION OF THE DRAWINGS

Figs. 1 and 2 show a prior art fabrication method and structure of U.S. 5,018,037, Krounbi, discussed above;
Fig. 3 is a cross-sectional view of one embodiment of the present invention; and
Fig. 4 is a cross-sectional view of the details of the structure of the MR region.

### DESCRIPTION OF THE PREFERRED EMBODIMENT

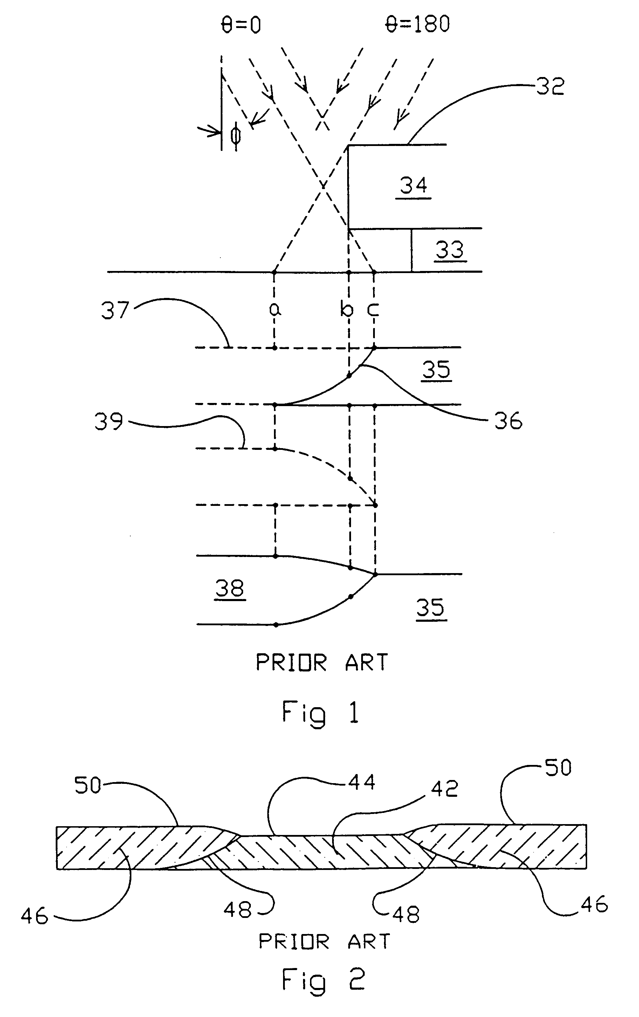

Fig. 1 shows the formation of the contiguous junction according to the prior art Krounbi structure. Although the Krounbi method of forming the hard bias layers is not the only technique available for practicing the present invention, it is an effective method to employ and is shown herein as an example. A stencil 32 comprises a bi-layer resist formed by a thin underlayer 33 and a thick imaging layer 34. One exposure and one develop step defines the edge profile of the resist. An undercut is created by dissolution of the underlayer 33 in a suitable developer with the undercut distance determined by the develop time.

The unmasked areas of the layer of MR material 35 are then removed by the use of a unidirectional process such as ion milling, for example. The angle of incidence Φ is controlled by suitably tilting the substrate relative to the incident beam. In addition, circular symmetry is obtained.

By rotating the substrate so that any given point sees the incident beam rotate conically about the azimuth angle except near the stencil 32 whose edge shadows the film 35 during some segment of substrate revolution. As shown in Fig. 1, for an azimuth angle of 0 degrees, there is exposure of the film 35 to point C and the exposure limit point moves progressively to the left until at an azimuth angle of 180 degrees the exposure limit point is moved to point a. The combined milling for this embodiment produces a curved taper 36 as a result of the removal during the milling process of the part 37 of the film shown in dashed lines.

The hard magnetic bias layer 38 is then deposited, by sputtering, for example, during a similar orientation and rotation of the substrate to produce a deposition profile such as that shown in dashed lines 39. The combined junction profile resulting from the deposition of bias layer 38 is shown in full line. Although the layer of MR material 35 is shown as a single layer in Fig. 1, it will be recognized that the MR element may comprise other layers, such as transverse bias layers, for example.

This junction profile comprises two overlapping tapers. The taper profile is determined by the height of the stencil 32 and the selected angle of incidence Φ. In a specific embodiment the stencil thickness was about 1 micro-meter and the angle of incidence was in the range of 70 to 80 degrees. This selected combination produced a taper length of about five times the thickness of the sensor. For electrical reliability the junction should be long; however, for magnetic reliability the junction should be short. For a particular application, junction lengths within the range 3 to 5 times the sensor thickness have shown to be suitable.

The magnetoresistive read transducer made by the above-described method is shown in Fig. 2 which shows the edge view of the sensor, i.e., the surface which is in close proximity to the magnetic recording medium from which previously recorded magnetic data is to be read. The transducer comprises an MR element 42 which extends over the central active region 44 of the transducer, and hard magnetic bias layers 46 which form an abutting junction 48 with the MR element 42. The hard magnetic bias layers 46 extend over the end regions 50 of the transducer so that a longitudinal bias can be produced in the end regions 50 only of the transducer.

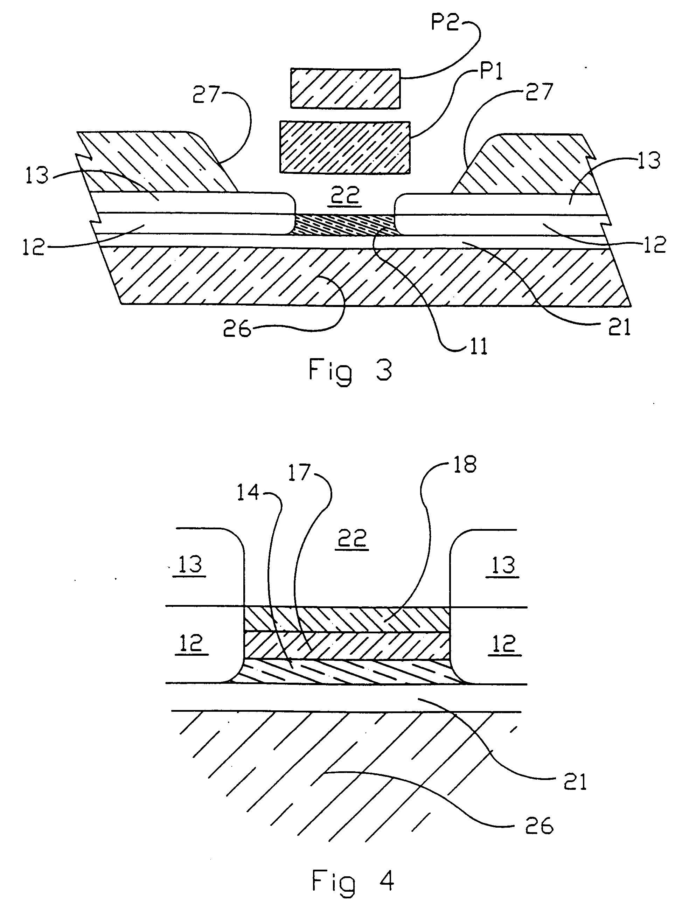

Fig. 3 shows one embodiment of the present invention representing an improvement over the above identified Krounbi patent. This improved embodiment includes an MR layer 11 positioned between two hard bias portions 12 as in the Krounbi patent. Hard bias portions 12 are overlaid with first conductive lead members 13.

As shown in more detail in Fig. 4, the MR portion of the structure has three layers including a magnetoresistive layer 14, preferably NiFe. MR layer 14 is overlaid by a layer 17, preferably Ta. Layer 17 in turn is overlaid by a layer 18 which is preferably a soft adjacent layer (SAL) which preferably comprises Ni, Fe and Rh and produces a transverse bias. Below MR portion 14 is a first gap portion 21, and above SAL layer 18 is a second gap portion 22. Gaps 21, 22 are preferably formed of Al₂ 0₃. A shield member 26 underlies gap 21. As seen in Fig. 3, a member P1 comprises a second shield layer and forms the leading edge of the inductive writing portion of the total transducer. A member P2 forms the trailing edge of the inductive writing portion.

In accordance with this invention, second conductor lead elements are deposited on first conductive leads 13. As shown in Fig. 3, these second conductive lead elements 27 are preferably thicker than conductive leads 13, thereby reducing the overall conductive lead resistance. This second conductive layer 27 is deposited prior to deposition of layer P2.

## Claims

1. A magnetoresistive read transducer comprising:
a magnetoresistive sensor having passive end regions separated by a central active region;
a thin film of magnetoresistive conductive layer (11) formed of magnetic material, said magnetoresistive conductive layer (11) extending over substantially only said central active region;
a first and a second thin film (12) of hard magnetic material; each of said first and said second thin films (12) of hard magnetic material forming an abutting junction having electrical and magnetic continuity with one end of said magnetoresistive conductive layer (11) , each of said thin films (12) of hard magnetic material extending over substantially only one of said passive end regions to produce a longitudinal bias in said magnetoresistive sensor;
first conductive lead members (13) overlying said first and second thin films (12) and magnetically coupled to said avtive central region of said magnetoresistive conductive layer (11); and
second conductive lead members (27) overlying said first conductive lead members (13) and electrically connected thereto.

2. A read transducer in accordance with claim 1 in which said second conductive lead members (27) are thicker than said first conductive lead members (13).

3. A read transducer in accordance with claim 1 or 2,
**characterized by** a magnetic soft bias structure (11) between said first and said second thin films (12) of hard magnetic material.

4. A read transducer in accordance with claim 3,
**characterized in**
that said soft bias structure includes a layer (14) of magnetoresistive material.

5. A read transducer in accordance with claim 4,
**characterized in**
that said layer (14) of magnetoresistive material is overlaid by a layer (17) of Ta.

6. A read transducer in accordance with claim 5;
**characterized in**
that said layer (17) of Ta is overlaid by a layer (18) of Ni, Fe and Rh.

7. A read transducer in accordance with one of claims 4 to 6,
**characterized by** a first nonmagnetic gap (21) underlying said layer (14) of magnetoresistive material.

8. A read transducer in accordance with claim 6 or 7,
**characterized by** a second nonmagnetic gap (22) overlying said layer (18) of Ni, Fe and Rh.
